# EUROPEAN PATENT APPLICATION

(11) **EP 1 746 721 A1**
(43) Date of publication of application: **24.01.2007**
(21) Application number: 06013014.3
(22) Date of filing: 23.06.2006
(51) Int. Cl.: H03H 7/38, H01Q 1/24

(54) **Antenna device for portable terminal, portable terminal, and method for providing antenna in portable terminal**

(30) Priority: 21.07.2005 KR 20050066240
(71) Applicant: Samsung Electronics Co., Ltd., Suwon-si, Gyeonggi-Do (KR)
(72) Inventor: Lee, Jae-Ho, Yeongtong-gu Suwon-si Gyeonggi-do (KR); Ryu, Yeong-Moo, Yeongtong-gu Suwon-si Gyeonggi-do (KR); Kim, Hark-Sang, Yeongtong-gu Suwon-si Gyeonggi-do (KR); Kim, Ji-Hwa, Yeongtong-gu Suwon-si Gyeonggi-do (KR); Jeong, Sung-Hun, Yeongtong-gu Suwon-si Gyeonggi-do (KR)
(74) Representative: Lang, Johannes

(57) **Abstract**

An antenna device for a portable terminal, a portable terminal, and a method for providing an antenna device in a portable terminal are provided. The antenna device includes a radio frequency (RF) board on the portable terminal, an antenna connected to the RF board, a connection line for connecting the RF board to the antenna device, and matching circuits at both ends of the connection line. The matching circuits compensate for loss from the connection line itself and connection losses so that a signal can be adjusted in accordance with the properties of the antenna. Consequently, the properties of the antenna device are stabilized.

## Description

### BACKGROUND OF THE INVENTION

### Field of the Invention:

The present invention relates generally to a portable terminal. In particular, the present invention relates to an antenna device for a portable terminal, a portable terminal incorporating an antenna device, and a method for providing an antenna device.

### Description of the Related Art:

A portable terminal refers to a device for enabling wireless communications between users or between a user and a service provider through a base station. A variety of contents are provided to a user through the portable terminal, including voice call, Short Message Service (SMS), mobile banking, TV broadcasting, on-line games, and Video On Demand (VOD).

Portable terminals comprise a bar type, a flip type, and a folder type according to their outward appearance. The bar-type portable terminal is configured to have a communication circuit and an input/output device with a transmitter and a receiver in a single housing. The flip-type portable terminal has a flip cover on the bar-type configuration. The folder-type portable terminal is so configured that a pair of housings are rotatably opened/closed and an input/output device is distributed in the housings. As a sliding-type portable terminal has emerged in recent years, efforts are made to increase portability and use convenience and meet diverse user demands via the sliding-type portable terminal together with the folder-type portable terminal.

The driving force behind diversity of mobile services provided through portable terminals is proliferation of the portable terminals, increasing user demands, and the commercial environment in which various contents are provided through the portable terminals.

To ensure a reception rate and a communication quality at or above an acceptable level in a propagation environment varying with the surroundings, the portable terminals are provided with antenna devices. The antenna devices have different configurations including length according to the use frequency bands that service providers offer.

These antenna devices comprises a built-in antenna installed within the housing of a portable terminal and an external antenna protruded outward from the portable terminal. Built-in antennas comprise a meander line antenna, a loop antenna, an inverted L antenna, and a Planar Inverted F antenna (PIFA). External antennas comprise antenna contained in an antenna housing like a helical antenna and an antenna extendable/retractable from/into the housing of the portable terminal like a whip antenna. The antenna housings of the external antennas are exposed outside or protruded from the terminal housing.

Meanwhile, as the portable terminals are equipped with a camera lens and have improved performance, the camera lens performs as in a standard digital camera. With the trend of camera lens toward high performance, the optical zoom function is added to the portable terminal. Therefore, a camera lens assembly for the portable terminal increases in size and occupies a large area. Many changes are thus required in a layout of circuits on a Printed Circuit Board (PCB). Particularly, as the spacing between an antenna and a Radio Frequency (RF) board becomes wide, it is difficult to stabilize the properties of an antenna device due to loss on a line connecting the antenna to the RF board and connection losses between the antenna and the connection line and between the RF board and the connection line.

### SUMMARY OF THE INVENTION

An object of the present invention is to address at least the above problems and/or disadvantages and to provide at least the advantages below. Accordingly, an object of the present invention is to provide an antenna device in a portable terminal, for stabilizing the properties of an antenna installed apart from a Radio Frequency (RF) board.

The above object may be achieved by providing an antenna device for a portable terminal. The antenna device comprises a RF board on the portable terminal, an antenna connected to the RF board, a connection line for connecting the RF board to the antenna device, and matching circuits at both ends of the connection line.

According exemplary embodiments of the present invention, an antenna device, a portable terminal, and a method for providing an antenna in a portable terminal, where an antenna may be connected to the RF board by means of a connection line and matching circuits at both ends of the connection line.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating the configuration of an antenna device for a portable terminal according to an exemplary embodiment of the present invention; and
FIG. 2 is a schematic diagram illustrating the antenna device to be installed in the portable terminal according to an exemplary embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will be described herein below with reference to the accompanying drawings. In the following description, well-known functions or constructions will be omitted for clarity and conciseness.

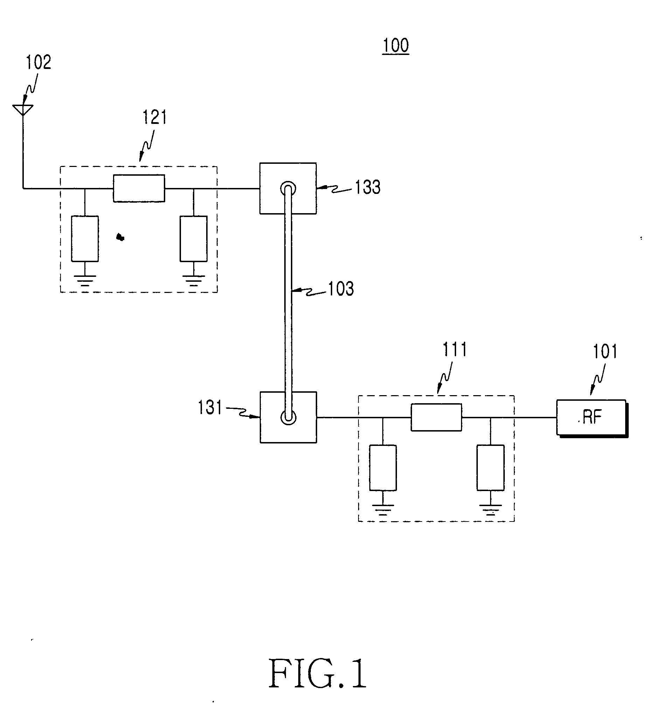

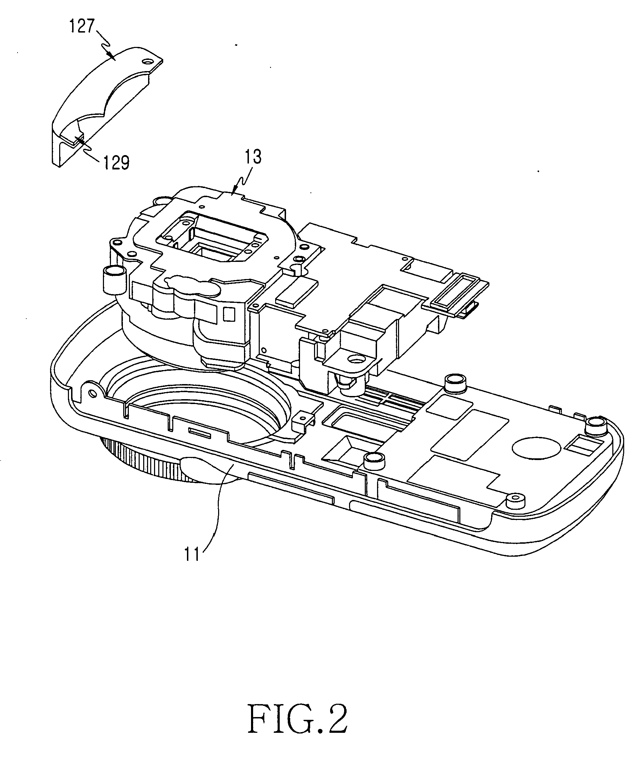

FIG. I is a diagram illustrating the configuration of an antenna device 100 for a portable terminal according to an exemplary embodiment of the present invention, and FIG. 2 is a schematic diagram illustrating the antenna device 100 to be installed in the portable terminal. Referring to FIG 1, the antenna device 100 comprises a Radio Frequency (RF) board 101, an antenna 102, and a connection line 103 that connects the RF board 101 to the antenna 102. Matching circuits 111 and 121 are provided at both ends of the connection line 103, that is, at an antenna end and at a RF end.

Considering that the antenna device is a built-in one, the antenna 102 can be one of small-size, stably operating antenna such as a meander line antenna, a loop antenna, an inverted L antenna, and a Planar Inverted F antenna (PIFA).

The RF board 101 is mounted on a main Printed Circuit Board (PCB) of the portable terminal, for carrying out signal transmission and reception. The antenna 102 is connected to the RF board 101 through the connection line 103. The connection line 103 can be a coaxial cable.

The matching circuit 111 is provided in the vicinity of the RF board 101, and the matching circuit 121 in the vicinity of the antenna 102. The matching circuits 111 and 121 are connected to each other via connectors 131 and 133 on the connection line 103. The matching circuits 111 and 121 compensate for loss involved in the length and resistance of the connection line 103, and connection losses.

Therefore, although a signal transmitted from the RF board 101 in accordance with the properties of the antenna 102 may experience slight loss during passing through the connection line 103, it is adjusted according to the properties of the antenna 102 by the matching circuits 111 and 121.

Referring to FIG. 2, the antenna device 100 may comprise an antenna base 127 to mount the antenna 102 therein. The antenna base 127 is installed within a housing I 1 of the portable terminal, fixed to a camera lens assembly 13, and the antenna 102 is attached onto the antenna base 127. The matching circuit 121 at the antenna end is formed on a PCB 129 installed on the antenna base 127. In other words, the antenna base 127 has a small-size PCB to form the matching circuit thereon. The matching circuit 111 at the RF end is formed on the RF board 101 or the main PCB (not shown) of the portable terminal.

As described above, an antenna device for a portable terminal according to exemplary embodiments of the present invention has matching circuits at both end portions of a connection line that connects an antenna to a RF board spaced from the antenna. Therefore, the matching circuits compensate for loss from the connection line itself and connection losses so that a signal can be adjusted in accordance with the properties of the antenna. Consequently, the properties of the antenna device are stabilized.

While the invention has been shown and described with reference to certain exemplary embodiment thereof, it will be understood by those skilled in the art that various changes in form and details may be made therein without departing from the spirit and scope of the invention as defined by the appended claims.

## Claims

1. An antenna device for a portable terminal, the antenna device comprising:
a radio frequency (RF) board;
an antenna;
a connection line;
a first matching circuit; and
a second matching circuit;
wherein the connection line connects the antenna, via the first matching circuit, to the RF board, via the second matching circuit.

2. The antenna device of claim 1, wherein the connection line comprises a coaxial cable.

3. The antenna device of claim 1, further comprising:
an antenna base for supporting the antenna; and
a printed circuit board (PCB) mounted on the antenna base,
wherein the PCB comprises the first matching circuit.

4. The antenna device of claim 1, wherein the antenna comprises at least one of an external antenna and a built-in antenna.

5. The antenna device of claim 1, wherein the first and second matching circuits are configured to compensate for at least one of a loss from the connection line and connection losses.

6. A portable terminal comprising:
a radio frequency (RF) board;
an antenna;
a housing comprising the RF board;
a connection line;
a first matching circuit; and
a second matching circuit;
wherein the connection line connects the antenna, via the first matching circuit, to the RF board, via the second matching circuit.

7. The portable terminal of claim 6, wherein the connection line comprises a coaxial cable.

8. The portable terminal of claim 6, further comprising:
an antenna base for supporting the antenna; and
a first printed circuit board (PCB) mounted on the antenna base,
wherein the first PCB comprises the first matching circuit.

9. The portable terminal of claim 6, further comprising a second printed circuit board (PCB),
wherein the housing comprises the second circuit board and the second PCB comprises the second matching circuit.

10. The portable terminal of claim 6, wherein the antenna comprises at least one of an external antenna and a built-in antenna.

11. The portable terminal of claim 6, wherein the first and second matching circuits are configured to compensate for at least one of a loss from the connection line and connection losses.

12. A method for providing an antenna device in a portable terminal, the method comprising:
connecting a first matching circuit to an antenna;
connecting a second matching circuit to a radio frequency (RF) board; and
connecting the antenna, via the first matching circuit, to the RF board, via
the second matching circuit.

13. The method of claim 12, wherein connecting the antenna to the RF board comprises connecting the first matching circuit to the second matching circuit by a coaxial cable.

14. The method of claim 12, further comprising:
providing an antenna base for supporting the antenna; and
mounting a first printed circuit board (PCB) on the antenna base,
wherein the first PCB comprises the first matching circuit.

15. The method of claim 12, further comprising providing a second printed circuit board (PCB) in a portable terminal,
wherein the second PCB comprises the second matching circuit.

16. The method of claim 12, wherein the antenna comprises at least one of an external antenna and a built-in antenna.

17. The method of claim 12, further comprising configuring at least one of the first matching circuit and the second matching circuit to compensate for at least one of a loss from the connection line and connection losses.
